(19)

Europäisches
Patentamt
European
Patent Office
Office européen
des brevets

(11) **EP 1 755 251 A2**

(12) **EUROPEAN PATENT APPLICATION**

(43) Date of publication:
 **21.02.2007 Bulletin 2007/08**

(51) Int Cl.:
 **H04L 1/16** *(2006.01)*   **H04L 1/18** *(2006.01)*
 **H04L 1/12** *(2006.01)*

(21) Application number: **06017283.0**

(22) Date of filing: **18.08.2006**

(84) Designated Contracting States:
 **AT BE BG CH CY CZ DE DK EE ES FI FR GB GR HU IE IS IT LI LT LU LV MC NL PL PT RO SE SI SK TR**
 Designated Extension States:
 **AL BA HR MK YU**

(30) Priority: **19.08.2005 KR 20050076305**

(71) Applicant: **Samsung Electronics Co., Ltd.**
 **Yeongtong-gu**
 **Suwon-si, Gyeonggi-do (KR)**

(72) Inventors:
 • **Kim, Soeng-Hun**
 **Yeongtong-gu**
 **Suwon-si**
 **Gyeonggi-do (KR)**

 • **Choi, Sung-Ho**
 **Yeongtong-gu**
 **Suwon-si**
 **Gyeonggi-do (KR)**
 • **Cho, Joon-Young**
 **Yeongtong-gu**
 **Suwon-si**
 **Gyeonggi-do (KR)**
 • **Kwon, Hwan-Joon**
 **Yeongtong-gu**
 **Suwon-si**
 **Gyeonggi-do (KR)**

(74) Representative: **Grünecker, Kinkeldey,**
 **Stockmair & Schwanhäusser**
 **Anwaltssozietät**
 **Maximilianstrasse 58**
 **80538 München (DE)**

(54) **Method and apparatus for controlling reliability of feedback signal in a mobile communication system supporting HARQ**

(57)   A method and apparatus for controlling reliability of a feedback signal in a mobile communication system supporting HARQ are provided. A transmitter determines reliability indication information indicating a required reliability for a feedback signal for a user data packet to be transmitted, and sends the user data packet and the reliability indication information in per packet control information associated with the user data packet. A receiver receives the user data packet and the per packet control information, decodes the user data packet according to the per packet control information, performs an error verification on the decoded user data packet that comprises errors, and transmits the feedback signal with a reliability determined, based on the reliability indication information according to the result of the error verification.

FIG.3

EP 1 755 251 A2

**Description**

## BACKGROUND OF THE INVENTION

Field of the Invention:

The present invention relates generally to a mobile communication system supporting Hybrid Automatic Repeat reQuest (HARQ). More particularly, the present invention relates to a method and apparatus for controlling the reliability of a feedback signal indicating whether a user data packet has been received successfully in a HARQ scheme.

Description of the Related Art:

Universal Mobile Telecommunications System (UMTS) is a 3rd Generation (3G) asynchronous mobile communication system operating in Wideband Code Division Multiple Access (WCDMA) based on European systems, Global System for Mobile communications (GSM) and General Packet Radio Services (GPRS).

The Long Term Evolution (LTE) of UMTS is under discussion by the 3rd Generation Partnership Project (3GPP) which standardized UMTS. The 3GPP LTE is a technology for enabling high-speed packet communications at or above about 100Mbps, aiming at commercialization by 2010. Many schemes have been proposed for the objective. Among the many schemes, there are methods of reducing the number of nodes existing in a communication path by simplifying a network structure and of radio protocol optimization for radio channels. Therefore, it is expected that the LTE structure will be changed from a conventional 4-node structure of the UMTS system to a 2-node or 3-node structure.

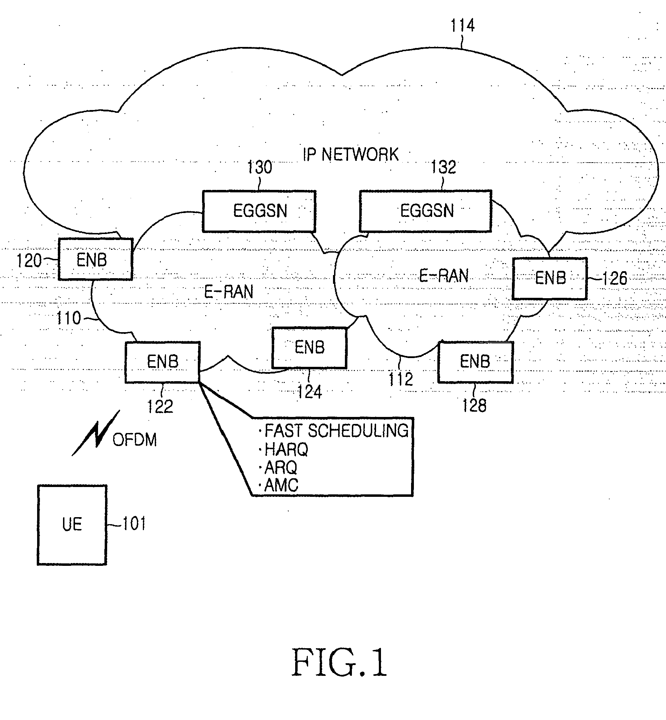

FIG. 1 illustrates an exemplary structure of an evolved UMTS mobile communication system. Referring to FIG. 1, Evolved Radio Access Networks (E-RANs) 110 and 112 have a simplified 2-node structure with Evolved Node B (ENB) and Evolved Gateway GPRS Serving Node (EGGSN). Thus, the E-RAN 110 includes ENBs 120, 122 and 124 and an EGGSN 130, and the E-RAN 112 includes ENBs 126 and 128 and an EGGSN 132. A User Equipment (UE) 101 is connected to an Internet Protocol (IP) network 114 via the E-RANs 110 and 112.

The ENBs 120 to 128 correspond to legacy Node Bs in the UMTS system, and are connected to the UE 101 via radio channels. Compared to the legacy node Bs, the ENBs 120 to 128 play a more complex role. Since all user traffic including real-time service like Voice over IP is serviced on shared channels in the 3GPP LTE, an entity for collecting the status information of UEs and scheduling the status information of UEs is required and the ENBs 120 to 128 are responsible for the scheduling.

As with High Speed Downlink Packet Access (HSDPA) and Enhanced uplink Dedicated CHannel (E-DCH), the LTE uses HARQ between the ENBs 120 to 128 and the UE 101. In the case where a variety of Quality of Service (QoS) requirements are not fulfilled by HARQ alone, a high layer may perform an outer Automatic Repeat request (ARQ). The outer ARQ also takes place between the UE 101 and the ENBs 120 to 128.

To realize a data rate of up to 100Mbps, the LTE may adopt Orthogonal Frequency Division Multiplexing (OFDM) in a 20-MHz bandwidth as a radio access technology. In addition, Adaptive Modulation and Coding (AMC) can be used in which a modulation scheme and a channel coding rate are selected adaptively according to the channel status of a UE.

HARQ is a scheme which increases reception success rate by soft-combining previous received data with retransmitted data. High-speed packet communication systems such as HSDPA and E-DCH use HARQ to increase transmission efficiency. For the same reason, the LTE uses HARQ between a UE and an ENB.

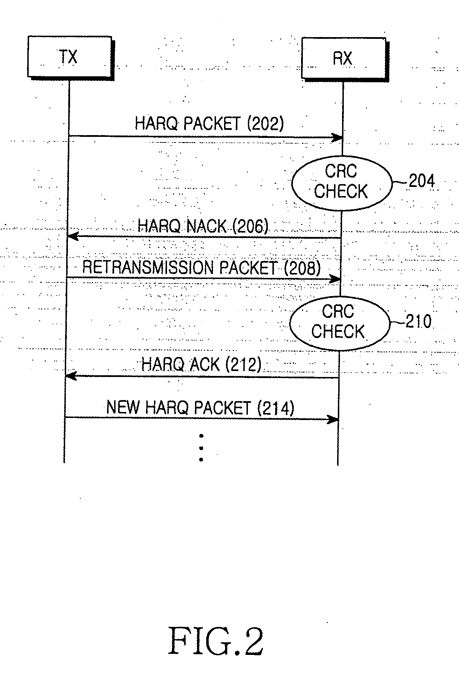

FIG. 2 is a simple diagram illustrating a signal flow for a typical HARQ procedure.

Referring to FIG. 2, a transmitter sends a HARQ packet with coded user data to a receiver in step 202. In step 204, the receiver determines whether the HARQ packet has errors, for example, by verifying the Cyclic Redundancy Code (CRC) of the HARQ packet. If the CRC verification is failed, the receiver feeds back a Negative ACKnowledgement (NACK) signal to the transmitter in step 206 and the transmitter retransmits the HARQ packet in response to the NACK signal in step 208. If the receiver succeeds in the CRC verification of the retransmitted packet in step 210, the receiver feeds back an ACKnowledgement (ACK) signal to the receiver in step 212 and then the transmitter transmits a new HARQ packet in step 214. The ACK and NACK signals are referred to as feedback signals.

The receiver, which has not deleted the received erroneous data in step 208, soft-combines the previous data with the retransmitted data, thus increasing a reception success rate. In case of errors in the ACK or NACK signal itself, these errors have a significant adverse effect on BLock Error Rate (BLER) during combining at the receiver. If the transmitter mistakes a NACK signal sent by the receiver for an ACK signal, it flushes the transmitted HARQ packet. As a result, the packet with NACK/ACK errors is completely lost at the HARQ level.

However, more transmission resources than needed are required in order to achieve a low feedback signal error rate for all kinds of services as required in an application level. Accordingly, there is a need for an improved technique for controlling the feedback signal error rate of each service according to the QoS requirement or packet characteristics of the service.

## SUMMARY OF THE INVENTION

An aspect of exemplary embodiments of the present invention is to address at least the above problems and/or disadvantages and to provide at least the advantages described below. Accordingly, an aspect of exemplary embodiments of the present invention is to provide a method and apparatus for controlling the error rate of a feedback signal according to a QoS requirement or the characteristic of a user data packet in a mobile communication system supporting HARQ.

Exemplary embodiments of the present invention provide a method and apparatus for controlling the error rate of a feedback signal using reliability indication information in a mobile communication system supporting HARQ.

Exemplary embodiments of the present invention also provide a method and apparatus for controlling the error rate of a feedback signal using the size of a user data packet to be transmitted in a mobile communication system supporting HARQ.

According to one aspect of exemplary embodiments of the present invention, in a method of controlling the reliability of a feedback signal indicating whether a user data packet has been successfully received in a mobile communication system supporting HARQ, reliability indication information is determined which indicates a required reliability for a feedback signal for a user data packet to be transmitted. The reliability indication information is included in per packet control information associated with the user data packet, and the user data packet and the per packet control information are transmitted. The feedback signal is received with the determined reliability for the transmitted user data packet and a determination is made as to whether to retransmit the user data packet according to the feedback signal.

According to another aspect of exemplary embodiments of the present invention, in an apparatus for controlling the reliability of a feedback signal indicating whether a user data packet has been successfully received in a mobile communication system supporting HARQ, a controller determines reliability indication information indicating a required reliability for a feedback signal for a user data packet to be transmitted. A per packet control information generator includes the reliability indication information in per packet control information associated with the user data packet, and transmits the per packet control information. A HARQ processor channel-encodes the user data packet and transmits the channel-coded user data packet. A feedback signal interpreter interprets the feedback signal received with the determined reliability for the transmitted user data packet and determines whether to retransmit the user data packet according to the feedback signal.

According to a further aspect of exemplary embodiments of the present invention, in a method of controlling the reliability of a feedback signal indicating whether a user data packet has been successfully received in a mobile communication system supporting HARQ, a user data packet and per packet control information are received. The per packet control information includes reliability indication information indicating a required reliability for a feedback signal for the user data packet. A reliability for the feedback signal is determined according to the reliability indication information. The user data packet is channel-decoded according to the per packet control information and an error verification is performed to determine whether the decoded user data packet has errors. The feedback signal is transmitted with the determined reliability according to the result of the error verification.

According to a further aspect of exemplary embodiments of the present invention, in an apparatus for controlling the reliability of a feedback signal indicating whether a user data packet has been successfully received in a mobile communication system supporting HARQ, a receiver receives a user data packet, and per packet control information including reliability indication information indicating a required reliability for a feedback signal for the user data packet. A reliability controller determines a reliability for the feedback signal according to the reliability indication information. A HARQ processor channel-decodes the user data packet according to the per packet control information and performs an error verification to determine whether the decoded user data packet has errors. A feedback signal generator generates a feedback signal according to the result of the error verification. A transmitter transmits the feedback signal with the determined reliability.

According to still another aspect of exemplary embodiments of the present invention, in a method of controlling the reliability of a feedback signal indicating whether a user data packet has been successfully received in a mobile communication system supporting HARQ, a user data packet and per packet control information are transmitted. The per packet control information includes at least a size of the user data packet. A feedback signal is received with a reliability corresponding to the size for the transmitted user data packet and it is determined whether to retransmit the user data packet according to the feedback signal.

According to yet another aspect of exemplary embodiments of the present invention, in an apparatus for controlling the reliability of a feedback signal indicating whether a user data packet has been successfully received in a mobile communication system supporting HARQ, a per packet control information generator generates per packet control information including at least the size of a user data packet and transmits the per packet control information. A HARQ processor channel-encodes the user data packet and transmitting the channel-coded user data packet. A feedback signal interpreter interprets a feedback signal received with a reliability corresponding to the size for the transmitted user data packet. The feedback signal indicates whether the user data packet has been received successfully. The feedback signal interpreter determines whether to retransmit the user data packet according to the feedback signal.

According to yet a further aspect of exemplary embodiments of the present invention, in a method of controlling the reliability of a feedback signal indicating whether a user data packet has been successfully received in a mobile communication system supporting HARQ, a user data packet and per packet control information are received. The per packet control information includes at least a size of the user data packet. A reliability is determined for a feedback signal for the user data packet according to the size. The user data packet is channel-decoded according to the per packet control information and an error verification is performed to determine whether the decoded user data packet has errors. The feedback signal is transmitted with the determined reliability according to the result of the error verification.

According to yet another aspect of exemplary embodiments of the present invention, in an apparatus for controlling the reliability of a feedback signal indicating whether a user data packet has been successfully received in a mobile communication system supporting HARQ, a receiver receives a user data packet, and per packet control information including at least the size of the user data packet. A reliability controller determines a reliability for a feedback signal for the user data packet according to the size. A HARQ processor channel-decodes the user data packet according to the per packet control information and performs an error verification to determine whether the decoded user data packet has errors. A feedback signal generator generates the feedback signal according to the result of the error verification. A transmitter transmits the feedback signal with the determined reliability.

## BRIEF DESCRIPTION OF THE DRAWINGS

The above and other objects, features and advantages of certain exemplary embodiments of the present invention will be more apparent from the following detailed description when taken in conjunction with the accompanying drawings, in which:

FIG. 1 illustrates an exemplary structure of an evolved mobile communication system;

FIG. 2 is a diagram illustrating a signal flow for a typical HARQ procedure;

FIG. 3 illustrates a transmission and reception structure supporting HARQ according to an exemplary embodiment of the present invention;

FIG. 4 illustrates an exemplary transmission (Tx) HARQ profile;

FIG. 5 illustrates a overall operation for controlling the reliability of a feedback signal using a received (Rx) HARQ profile according to an exemplary embodiment of the present invention;

FIG. 6 illustrates a Rx HARQ profile signaling operation according to an exemplary embodiment of the present invention;

FIG. 7 is a flowchart illustrating an operation for transmitting a user data packet according to an exemplary embodiment of the present invention;

FIG. 8 is a flowchart illustrating an operation for receiving a user data packet according to an exemplary embodiment of the present invention;

FIG. 9 illustrates an overall operation for controlling the reliability of a feedback signal according to an exemplary embodiment of the present invention;

FIG. 10 is a flowchart illustrating an operation for receiving a user data packet according to an exemplary embodiment of the present invention;

FIG. 11 is a block diagram of a transmitter according to an exemplary embodiment of the present invention; and

FIG. 12 is a block diagram of a receiver according to an exemplary embodiment of the present invention.

Throughout the drawings, the same drawing reference numerals will be understood to refer to the same elements, features, and structures.

## DETAILED DESCRIPTION OF EXEMPLARY EMBODIMENTS

The matters defined in the description such as a detailed construction and elements are provided to assist in a comprehensive understanding of exemplary embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

Exemplary embodiments of the present invention are intended to control the reliability of a HARQ feedback signal according to a QoS requirement or the characteristics of a packet. The HARQ feedback signal is an ACK or NACK signal between a transmitter and a receiver. A NACK/ACK error is defined as the transmitter's mistaking a NACK signal sent by the receiver for an ACK signal, and an ACK/NACK error is defined as the transmitter's mistaking an ACK signal sent by the receiver for a NACK signal. The NACK/ACK error rate can be adjusted by control of the reliability of the NACK signal, and the ACK/NACK error rate can be adjusted by control of the reliability of the ACK signal.

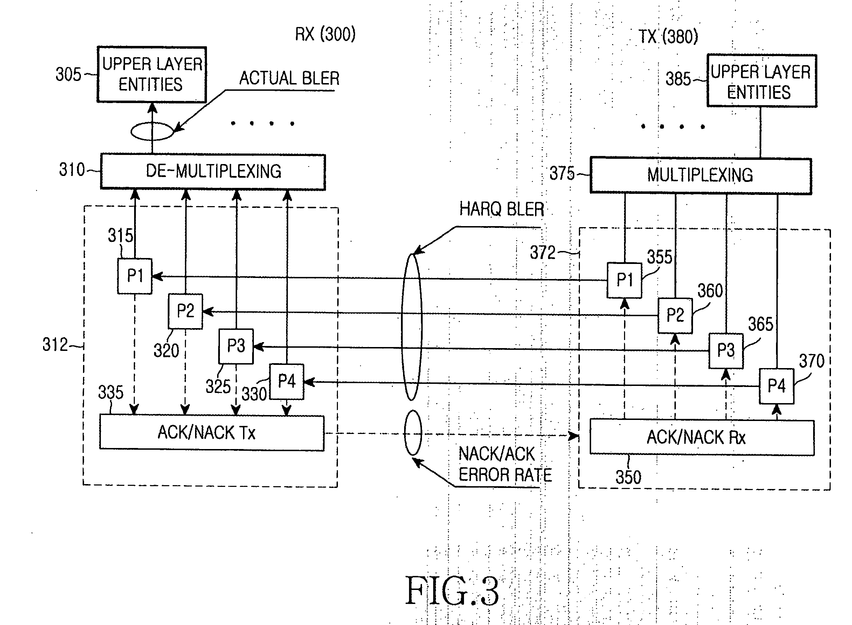

FIG. 3 illustrates a transmission and reception structure supporting HARQ according to an exemplary embodiment of the present invention.

Referring to FIG. 3, the HARQ transmission and reception structure includes a Tx HARQ entity 372 and an Rx HARQ entity 312. The Tx HARQ entity 372 is responsible for transmission and reception of a HARQ packet with coded user data, and the Rx HARQ entity 312 is responsible for soft combining of received HARQ packets and ACK/NACK transmission. For a downlink service, the Tx HARQ entity 372 and the Rx HARQ entity 312 are provided in a Node B and a UE, respectively. For an uplink service, the Tx HARQ entity 372 and the Rx HARQ entity 312 are provided in the UE and the Node B, respectively. Therefore, a transmitter 380 and a receiver 300 are not limited to at least one of the UE and the Node B.

For a variety of services that can be provided by HARQ, the transmitter 380 and the receiver 300 are comprised of a plurality of upper-layer entities 385 and 305, a multiplexer (MUX) 375, and a demultiplexer (DEMUX) 310. The MUX 375 inserts multiplexing information in data generated from the upper-layer entities 385 and provides the resulting data to the Tx HARQ entity 372. The DEMUX 310 provides data received from the Rx HARQ entity 312 using the multiplexing information of the data to appropriate upper-layer entities 305.

For parallel HARQ operations, the Tx HARQ entity 372 includes a plurality of Tx HARQ processors 355, 360, 365 and 370, and the Rx HARQ entity 312 includes a plurality of Rx HARQ processors 315, 320, 325 and 330. Each HARQ processor is a basic unit device for transmission/reception of a user packet. The Tx HARQ processors 355, 360, 365 and 370 operate for transmission and retransmission of a user packet, and the Rx HARQ processors 315, 320, 325 and 330 operate for reception and soft-combining of user packets.

The HARQ processors 355 to 370 and 315 to 330 reside in pairs in the transmitter 380 and the receiver 300. The HARQ entities 372 and 312 have a plurality of HARQ processor pairs 355 to 370 and 315 to 330. While one of a HARQ processor pair waits for ACK/NACK reception, the other HARQ processor can send data. Hence, continuous transmission and reception is possible by use of the plurality of HARQ processors 355 to 370 and 315 to 330.

For example, regarding the basic operation of a first HARQ processor pair 355 and 315, the Tx HARQ processor 355 channel-encodes data received from the MUX 375, sends the channel-coded data, and stores the channel-coded data in a buffer (not shown) for retransmission later. Upon receipt of an ACK signal for the data at an ACK/NACK receiver 350, the Tx HARQ processor 355 flushes the data from the buffer. If a NACK signal is received for the data at the ACK/NACK receiver 350, the HARQ Tx processor 355 retransmits the buffered data. The HARQ BLER is determined depending on whether the Rx HARQ processor 315 finally recovers the HARQ packet using the initial transmission data and the retransmission data.

The Rx HARQ processor 315 channel-decodes data received on a physical channel and determines whether the data has errors by CRC verification. If errors are detected, the Rx HARQ processor 315 stores the data in a buffer (not shown) and sends a NACK signal through an ACK/NACK transmitter 335. Upon receipt of retransmission data for the data, the Rx HARQ processor 315 soft-combines the buffered data with the retransmission data and performs error verification again. In the presence of errors, the Rx HARQ processor 315 sends a NACK signal through the ACK/NACK transmitter 335 and repeats the above operation. In the absence of errors, the Rx HARQ processor 315 sends an ACK signal through the ACK/NACK transmitter 335 and provides the combined data to the DEMUX310.

With indefinite repetition of HARQ retransmission, the HARQ BLER is reduced to 0, in theory. However, since HARQ retransmission involves delay, typically the number of retransmissions that ensures an acceptable level of BLER is allowed. Hence, the maximum number of retransmissions is set.

As described above, each of the HARQ entities 372 and 312 services the plurality of upper-layer entities 385 or 305 which have QoS requirements. For example, upper layer A requests Voice over IP (VoIP) as service A and upper layer B requests File Transfer Protocol (FTP) as service B. The QoS requirements of service A and service B are different as shown in Table 1 below.

(Table 1)

|  | Delay Requirement | BLER Requirement |
|---|---|---|
| Upper layer A | 200 msec | 10e-2 |
| Upper layer B | No requirement | 10e-5 |

The above QoS requirements can be fulfilled by adjusting the maximum retransmission number and/or transmit power in the HARQ scheme.

Data B from upper layer B is tolerant of delay but requests a very low BLER which can be satisfied by setting a relatively large maximum retransmission number, for example, 8 for data B.

In contrast, data A from upper layer A is sensitive to delay and is tolerant of a relatively high BLER. Thus, the delay requirement of data A can be fulfilled by setting a relatively small maximum retransmission number, for example, 3. The relatively high required BLER of data A can be met by three retransmissions.

As with any other communication system, transmit power has a direct effect on BLER in HARQ. The BLER decreases with higher transmit power. Like the maximum retransmission number, transmit power can be used to satisfy the QoS requirement. Information defining a HARQ operation according to the QoS requirement of an upper layer, specifically, information indicating transmit power and a maximum transmission number limited according to the required QoS is called a Tx HARQ profile.

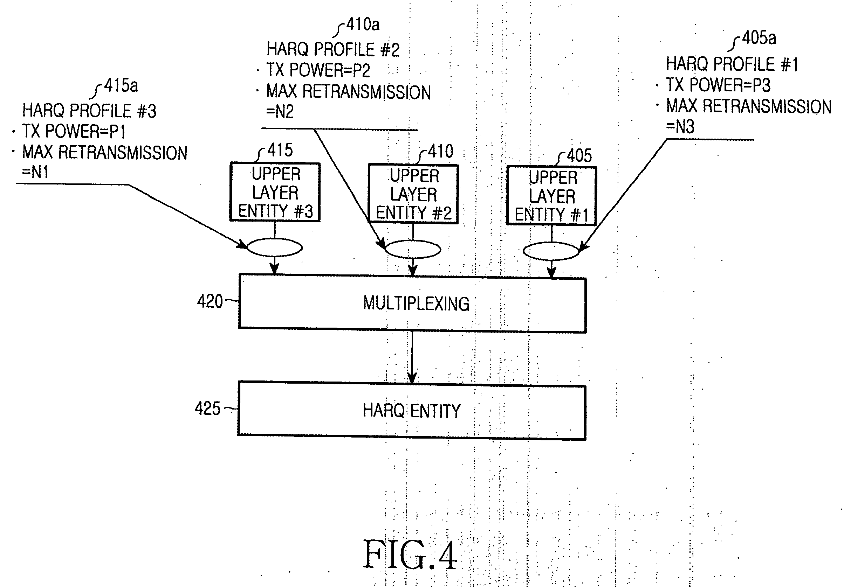

FIG. 4 illustrates an exemplary Tx HARQ profile. Referring to FIG. 4, a HARQ profile is defined for data requesting the same QoS level. Three upper-layer entities 405, 410 and 415 (upper-layer entities #1, #2 and #3) requiring different QoS levels have different HARQ profiles 405a, 410a and 415a (HARQ profiles #1, #2 and #3). To be more specific, HARQ profile #1 for upper-layer entity #1 includes a transmit power of p3 and a maximum retransmission number of n3. Transmit power p1 and a maximum retransmission number n1 are specified in HARQ profile #2 and transmit power p1 and a maximum retransmission number n1 are specified in HARQ profile #3. Data from each upper-layer entity is provided to a HARQ entity 425 through a MUX 420 and processed according to the HARQ profile of the data.

Considering the effects of the NACK/ACK error rate on actual QoS, the HARQ profile does not suffice in perfectly satisfying the required QoS of the upper layer. For notational simplicity, a final BLER after operation according to a given HARQ profile is called HARQ BLER, and a BLER provided actually to the upper layer according to the final BLER and the NACK/ACK error rate is called actual BLER.

The effect of the HARQ BLER and the NACK/ACK error rate on the actual BLER is expressed as

$$Actual\_BLER =$$
$$HARQ\_BLER + NACK / ACK\_error\_rate \times number\ of\ retransmissions\ per\ HARQcycle$$
$$\ldots\ldots(1)$$

where HARQ cycle is a period for which one HARQ operation is completed according to a HARQ profile. Completion of a HARQ operation means that transmission of a HARQ packet is successful or abandoned due to a limit on the number of retransmissions. Thus, "number of retransmissions per HARQ cycle" is the number of NACK signals allowed until the HARQ operation completion. Wrong identification of a NACK signal sent by the receiver as an ACK signal leads to termination of the HARQ operation without success in packet transmission. Hence, the NACK/ACK error rate is reflected in the actual BLER. If n NACK signals are created for one HARQ cycle, the probability of generating the NACK/ACK error increases n times.

When retransmission occurs twice on the average in one HARQ cycle, the effect of the HARQ BLER and the NACK/ACK error rate on the actual BLER is given as Table 2 below according to equation (1).

(Table 2)

| HARQ BLER | NACK/ACK error rate | Actual BLER |
|---|---|---|
| 0.1000 | 0.1000 | 0.2800 |
| 0.1000 | 0.0100 | 0.1180 |
| 0.1000 | 0.0010 | 0.1018 |
| 0.0100 | 0.0100 | 0.0298 |
| 0.0100 | 0.0010 | 0.0120 |
| 0.0100 | 0.0001 | 0.0102 |

As noted from Table 2, the difference between the HARQ BLER and the actual BLER becomes wider as the NACK/ACK error rate increases. For example, for a HARQ BLER of 10e-1 and a NACK/ACK error rate of 10e-1, the actual BLER is 2.8 10e-1. For a HARQ BLER of 10e-1 and a NACK/ACK error rate of 10e-2, the actual BLER is 1.18 10e-1.

As stated before, the HARQ profile is means to control the HARQ BLER. Yet, it is insufficient to control the HARQ BLER only with no regard to the NACK/ACK error rate in satisfying the required QoS of the upper layer.

Take Table 1 for an example. Upper layer A requests an actual BLER of 10-2 and upper layer B requests an actual BLER of 10e-5. HARQ profiles are defined for upper layer A and upper layer B such that HARQ BLER is 10e-2 and 10e-5 for upper layer A and upper layer B, respectively, equal to the above required QoS levels. Then, the same NACK/ACK error rate of 10e-3 is set for two services, and thus the actual BLERs of upper layer A and upper layer B are 1.2 10e-2 and 2 10e-3, respectively. As a consequence, the use of the NACK/ACK error rate of 10e-3 does not result in a desired QoS level for upper layer B.

On the other hand, if the same NACK/ACK error rate 10e-6 is used for the two services, the actual BLER is 10e-2 for upper layer A and 1.2 10e-5 for upper layer B. The QoS levels of both services are fulfilled, but more transmission resources than needed are used for service A to achieve a low NACK/ACK error rate. In general, the NACK/ACK error rate depends on the transmit power of a NACK signal or the number of retransmissions of the NACK signal. Since the NACK signal is 1 bit, no channel coding is applied to the NACK signal and tripled transmission resources are taken to decrease the NACK/ACK error rate by one level. In other words, transmission resources taken for a NACK/ACK error rate of 10e-6 is 27 times larger than those for a NACK/ACK error rate of 10-3.

An actual BLER gain resulting from the decrease of the NACK/ACK error rate characteristically converges to a certain value. Thus, an optimal NACK/ACK error rate exists for any HARQ BLER with respect to transmission resources. Because the optimal NACK/ACK error rate is determined by a plurality of variables, it is necessary to adjust the NACK/ACK error rate according to a required QoS.

In an exemplary embodiment of the present invention, an Rx HARQ profile is defined which provides information indicating the reliability of a feedback signal. As stated earlier, the HARQ profile is a set of parameters associated with a HARQ operation, defined to acquire a desired QoS through the HARQ operation. The Rx HARQ profile is defined in correspondence with the Tx HARQ profile described above. The Tx HARQ profile provides information about the transmit power and the maximum transmission number of a transmission HARQ packet, and the Rx HARQ profile indicates the reliability of a NACK signal and/or an ACK signal for the HARQ packet. These Tx and Rx HARQ profiles are associated with the NACK/ACK error rate and the ACK/NACK error rate.

An exemplary embodiment of the present invention presents an Rx HARQ profile, mainly taking into account the NACK/ACK error rate, and an Rx HARQ profile, taking into account both the NACK/ACK error rate and the ACK/NACK error rate. Hereinafter, the NACK/ACK error rate and the NACK reliability are interchangeably used in the same meaning, and the ACK/ANCK error rate and the ACK reliability are interchangeably used in the same meaning.

Like a Tx HARQ profile, an Rx HARQ profile is defined for data with the same QoS requirement. For example, different parameters may be set in the Rx HARQ profiles of VoIP and FTP.

The receiver determines a NACK/ACK error rate for the feedback signal of a received HARQ packet according to an Rx HARQ profile with information indicating the reliability of the feedback signal. For example, when receiving a HARQ packet requesting a NACK/ACK error rate of 10e-3, the receiver adjusts the reliability of a NACK signal for the packet so that the NACK signal for the packet has the requested error rate. The reliability of the NACK signal can be controlled in many ways including control of a power offset for the NACK signal.

The power offset control method is to adjust a transmit power offset from a predetermined reference transmit power. Typically, the transmit power offset is determined according to a reliability or BLER required for data. The reference transmit power varies depending on closed-loop power control or open-loop power control, which is beyond the scope of the present invention and thus is not described in detail herein for clarity and conciseness.

Described below is how the NACK signal reliability is controlled by use of a reference transmit power and a transmit power offset by an example. In the example, NACK/ACK error rates and transmit power offsets for Rx HARQ profiles are listed in Table 3 below.

(Table 3)

|  | Rx HARQ profile ID | Required NACK/ACK error rate | NACK transmit power offset |
|---|---|---|---|
| Upper layer 1 | Rx HARQ profile 1 | 10e-3 | x |
| Upper layer 2 | Rx HARQ profile 2 | 10e-6 | y |

Given a reference transmit power z, upon receipt of HARQ packet 1 associated with Rx HARQ profile 1, the receiver uses transmit power (z+x) calculated by adding the transmit power offset x indicated by Rx HARQ profile 1 to the reference transmit power z for a NACK signal for HARQ packet 1. Given a reference transmit power w, upon receipt of HARQ packet 2 associated with Rx HARQ profile 2, the receiver uses transmit power (w+y) calculated by adding the transmit power offset y indicated by Rx HARQ profile 2 to the reference transmit power w for a NACK signal for HARQ packet 2.

The NACK/ACK error rate can be controlled by adjusting the repetition number of the NACK signal. Although the 1-bit NACK/ACK signal is basically transmitted once, its reliability is increased by repeated transmission. For example, the NACK signal is not repeatedly transmitted for a packet requesting a NACK/ACK error rate of 10e-3 and the NACK signal occurs twice for a packet requesting a NACK/ACK error rate of 10e-4. In this case, the Rx HARQ profile specifies the repetition number of the NACK signal.

While the NACK/ACK error rate can be controlled in many ways, it is assumed that the NACK/ACK error rate is adjusted using power offset, for better understanding of the present invention.

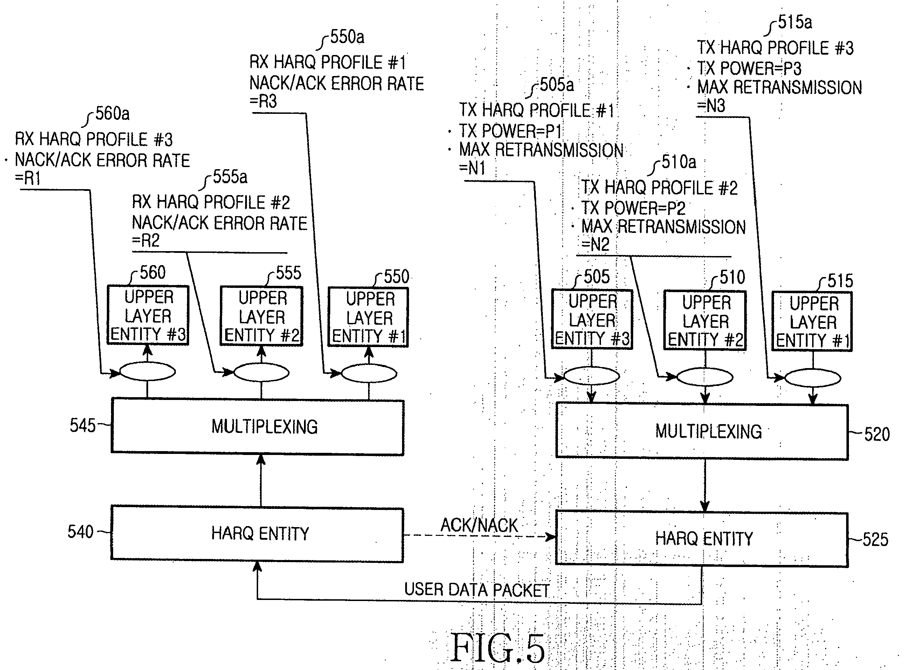

FIG. 5 illustrates an overall operation for controlling the reliability of a feedback signal using a received (Rx) HARQ profile according to an exemplary embodiment of the present invention.

Referring to FIG. 5, three upper-layer entities 505, 510 and 515 requesting different QoS levels reside in a transmitter and three upper-layer entities 550, 555 and 560 (Tx upper-layer entities #1, #2 and #3) requesting different QoS levels reside in a receiver. The upper-layer entities 505, 510 and 515 (Rx upper-layer entities #1, #2 and #3) have Tx HARQ profiles 505a, 510a, and 515a (Tx HARQ profiles #1, #2 and #3), and the upper-layer entities 550, 555 and 560 have Rx HARQ profiles 550a, 555a and 560a (Rx HARQ profiles #1, #2 and #3). For example, data packet #1 from Tx upper-layer entity #1 may occur up to n1 times with a transmit power of p1 according to Tx HARQ profile #1. Data from the upper layer entities 505, 510 and 515 is provided to a HARQ entity 525 through a MUX 520. The Rx HARQ entity 540 sends a user data packet through a MUX 545 and applies a NACK power offset for data packet #1 according to the Rx HARQ profile 550a of data packet #1 so that the NACK/ACK error rate becomes r1.

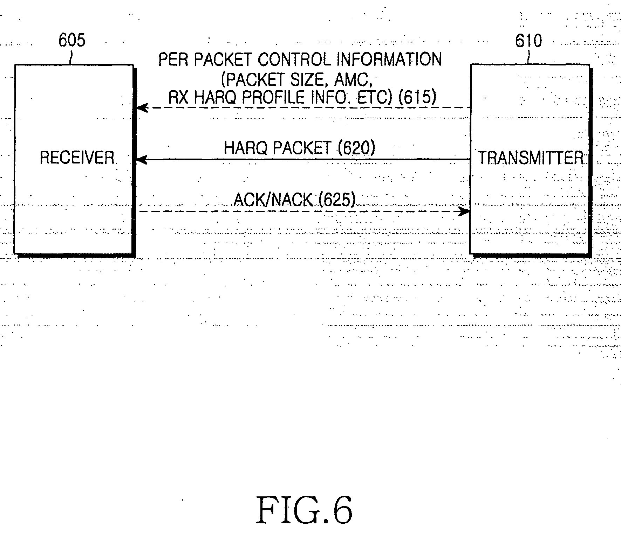

For the above operation to be viable, the receiver must have knowledge of the Rx HARQ profile of a received packet. FIG. 6 illustrates an Rx HARQ profile signaling operation according to an exemplary embodiment of the present invention.

Referring to FIG. 6, there are three kinds of data exchanged between a transmitter 610 and a receiver 605 in a communication system using Node B-controlled scheduling and HARQ such as HSDPA, E-DCH and LTE. The transmitter 610 sends per packet control information 615 to the receiver 605 so that the receiver 605 can process a HARQ packet. The per packet control information 615 may contain the size of then HARQ packet, a coding scheme, a coding rate and a modulation scheme used for the HARQ packet, a HARQ processor ID, a retransmission sequence number, and especially Rx HARQ profile information.

The transmitter 610 sends the per packet control information 615 and the HARQ packet 620 to the receiver 605, and the receiver 605 processes the HARQ packet 620 based on the per packet control information 615. The receiver then sends an ACK/NACK signal 625 according to whether the HARQ packet 620 passes CRC verification. The HARQ packet 620 is a packet with multiplexed user data such as VoIP data or FTP data.

Transmission of an Rx HARQ profile to the receiver 605 can be considered in two ways.

(1) The transmitter 610 explicitly notifies the receiver 605 of the Rx HARQ profile of the HARQ packet. To do so, an information field associated with the Rx HARQ profile is set in the per packet control information 615. Two methods are available for the explicit signaling.

One method is that the IDs of Rx HARQ profiles are preset between the transmitter 610 and the receiver 605 and the transmitter 610 notifies the receiver 605 of the ID of the Rx HARQ profile of the HARQ packet 620. In this case, as many IDs as Rx HARQ profiles defined for a UE are needed and the per packet control information 615 increases correspondingly in amount.

For example, the Rx HARQ profile for VoIP service specifies a NACK/ACK error rate of 10e-3 and an Rx HARQ profile ID of 0, and the Rx HARQ profile for FTP service specifies a NACK/ACK error rate of 10e-4 and an Rx HARQ profile ID of 1. The transmitter 610 inserts 0 in an Rx HARQ profile ID field in the per packet control information 615 when sending a VoIP packet in the HARQ packet 620. When sending a NACK signal, the receiver 605 renders the NACK/ACK error rate of the NACK signal to be 10e-3.

Since the per packet control information 615 is a physical channel signal, the size of each information field is fixed and thus the size of an information field of interest cannot be changed according to the number of Rx HARQ profiles. Accordingly, the number of bits with which to represent a maximum number of Rx HARQ profiles is allocated to the Rx HARQ profile ID field.

Another explicit signaling method is that Rx HARQ profiles are classified into two or four NACK/ACK error classes and the transmitter 610 indicates a NACK/ACK error rate class to the receiver 605 in the per packet control information 615, instead of the Rx HARQ profile. Even though a plurality of Rx HARQ profiles are defined for a UE, the transmitter 610 can notify the receiver 605 of a NACK/ACK error rate for the HARQ packet 620 by a 1- or 2-bit NACK/ACK error rate class field.

(2) The mapping relation between HARQ processor IDs and Rx HARQ profiles is preset between the transmitter 610 and the receiver 605, and the transmitter 610 indicates the Rx HARQ profile of the HARQ packet 620 to the receiver 605 by a HARQ processor ID.

HARQ processor IDs are mapped to Rx HARQ profiles as illustrated in Table 4 below. In this way, neither the Rx HARQ profile ID nor the NACK/ACK error rate class is signaled separately.

(Table 4)

| HARQ processor ID | Rx HARQ profile |
|---|---|
| 0 | NACK/ACK error rate=10e-2 |
| 1 | NACK/ACK error rate=10e-3 |
| 2 | NACK/ACK error rate=10e-2 |
| 3 | NACK/ACK error rate=10e-4 |
| 4 | NACK/ACK error rate=10e-2 |
| ... | ... |

Without signaling a HARQ profile ID or a NACK/ACK error rate class, this method advantageously saves radio resources. However, a particular service is provided by a particular HARQ process all the time. For example, the VoIP service is provided by HARQ process #1 and the FTF service by HARQ process #3, all the time.

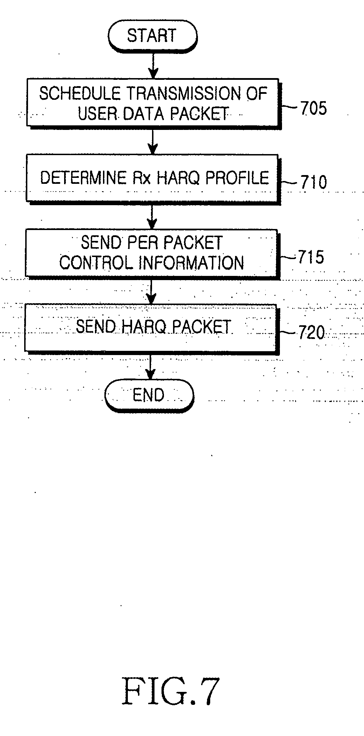

FIG. 7 is a flowchart illustrating an operation for transmitting Rx HARQ profile information according to an exemplary embodiment of the present invention.

Referring to FIG. 7, user data transmission is scheduled in step 705. On the uplink, this means that a UE is allowed to send data in the next transmission time interval by a Node B scheduler. On the downlink, this implies that the Node B scheduler has determined to send data to a particular UE in the next transmission time interval.

In step 710, the transmitter determines data to be sent in the scheduled transmission time interval. In other words, the transmitter selects an upper-layer entity to send data in the next transmission time interval. Once the upper-layer entity is selected, the HARQ profile of the upper-layer entity, that is the Tx HARQ profile of the data and the Rx HARQ profile of the data with information indicating the reliability of a feedback signal for the data are known.

The transmitter constructs a HARQ packet with data provided from the selected upper-layer entity, constructs per packet control information for the HARQ packet, and sends the per packet control information in step 715. The per packet control information contains information indicating a Rx HARQ profile for the HARQ packet, such as a HARQ profile ID or a NACK/ACK error rate class ID. Alternatively, if the mapping relation between Rx HARQ profiles and HARQ processes is known to both the transmitter and the receiver, the transmitter signals a HARQ processor ID associated with the reliability information of the HARQ packet by the per packet control information.

The transmitter sends the HARQ packet in step 720.

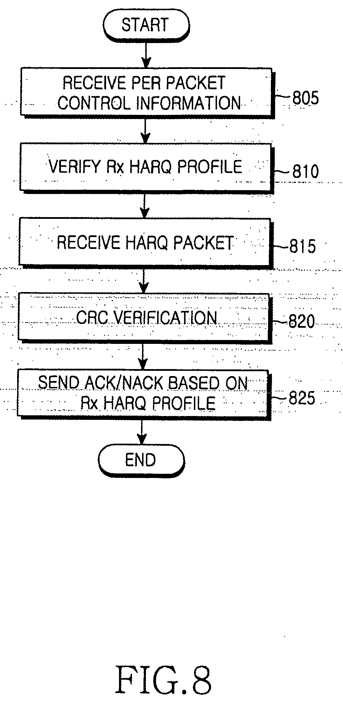

FIG. 8 is a flowchart illustrating an operation for receiving the user data packet according to an exemplary embodiment of the present invention.

Referring to FIG. 8, the receiver receives per packet control information associated with a HARQ packet from the transmitter in step 805.

In step 810, the receiver extracts Rx HARQ profile information from the per packet control information. If the per packet control information contains a Rx HARQ profile ID, the receiver identifies a Rx HARQ profile by the Rx HARQ profile ID and determines a NACK/ACK error rate according to the Rx HARQ profile. If the per packet control information contains a NACK/ACK error rate class, the receiver determines a NACK/ACK error rate based on the NACK/ACK error rate class. If the mapping relation between Rx HARQ profiles and HARQ processor IDs is known, the receiver identifies a Rx HARQ profile by a HARQ processor ID included in the per packet control information and determines a NACK/ACK error rate according to the Rx HARQ profile.

The receiver receives the HARQ packet and decodes the HARQ packet using the per packet control information in step 815. The receiver performs a CRC verification on the decoded packet in step 820 and determines whether to send an ACK signal or a NACK signal according to the CRC verification result in step 825. In the case of sending the NACK signal, the receiver sends the NACK signal with the reliability fulfilling the NACK/ACK error rate.

An exemplary embodiment of the present invention described above is characterized in that the reliability of a feedback signal is adjusted according to data types (that is, required QoS levels). In an exemplary embodiment of the present invention, the reliability of the feedback signal is adjusted according to the size of a data packet. As stated before, NACK/ACK errors affect a final BLER and the effect of the final BLER on the system increases in proportion to packet size. For example, in the case where the final BLER increases for a 100-bit packet and a 1000-bit packet, the amount of radio resources taken for the BLER increment differs for the two packets. If the final BLER increment is 0.1, this means that radio resources corresponding to 10 bits are further consumed for the 100-bit packet, and more consumed radio resources correspond to 100 bits for the 1000-bit packet.

As a consequence, it is efficient to reduce the NACK/ACK error rate for a higher packet size. On the same logic, it is efficient to reduce the ACK/NACK error rate for a higher packet size. An ACK/NACK error is the transmitter's mistake of an ACK signal sent by the receiver for a NACK signal. If an ACK/NACK signal is generated, a HARQ packet is unnecessarily retransmitted. As the size of the HARQ packet is larger, more transmission resources are consumed due to the unnecessary retransmission.

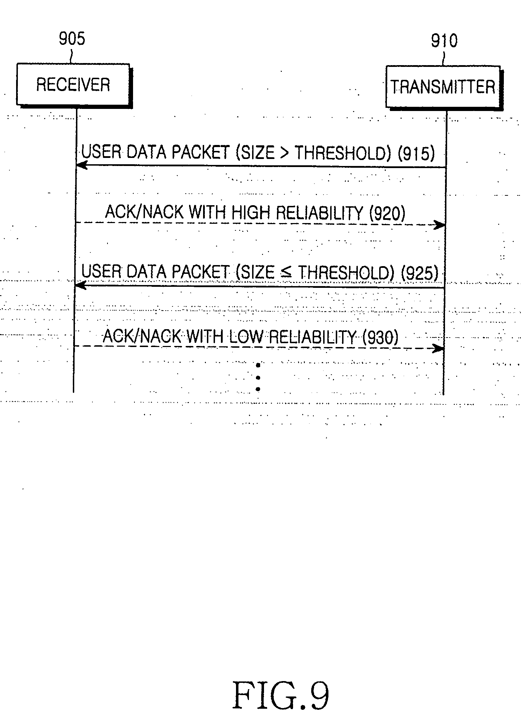

FIG. 9 illustrates an overall operation for controlling the reliability of a feedback signal according to an exemplary embodiment of the present invention. In the exemplary embodiment, a size threshold and an Rx HARQ profile are used for a user data packet.

Referring to FIG. 9, a receiver 905 receives a first user data packet from a transmitter 910 in step 915. If the first user data packet is larger than a predetermined size threshold, the receiver 905 sends an ACK/NACK signal with high reliability for the first user data packet in step 920. In step 925, the receiver 905 receives a second user data packet from the transmitter 910. If the second user data packet is smaller than the size threshold, the receiver 905 sends an ACK/NACK signal with low reliability for the second user data packet in step 930.

Both the NACK/ACK error rate and the ACK/NACK error rate can be controlled in an exemplary embodiment of the present invention. Therefore, an Rx HARQ profile contains both NACK reliability information (that is, NACK/ACK error rate) and ACK reliability information (that is, ACK/NACK error rate) or at least one of them.

The Rx HARQ profile may be configured as illustrated in Table 5, by way of example.

(Table 5)

|  | Required NACK/ACK error rate (NACK reliability) | NACK power offset | Required ACK/NACK error rate (ACK reliability) | ACK power offset |
|---|---|---|---|---|
| HARQ packet > threshold | 10e-4 | a | 10e-3 | c |
| HARQ packet < threshold | 10e-3 | b | 10e-2 | d |

In an exemplary embodiment of the present invention, the Rx HARQ profile may further include a repetition number for the ACK/NACK signal.

The receiver determines a NACK reliability and an ACK reliability according to the size of the received HARQ packet. To achieve the determined reliability, the receiver determines an appropriate transmit power offset, for example. The size threshold and the Rx HARQ profile is signaled from the network to the receiver or preset in the receiver.

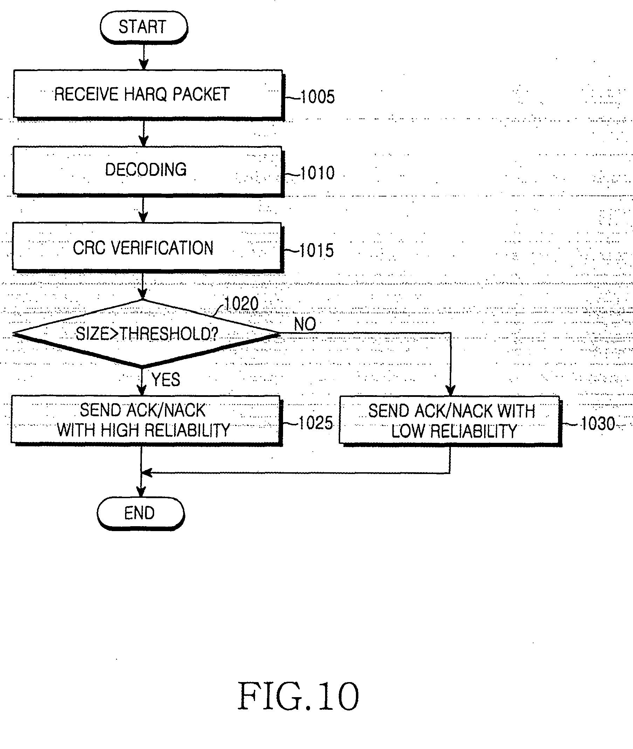

Since the transmitter operates in a conventional manner, a reception operation according to an exemplary embodiment of the present invention will be described below. FIG. 10 is a flowchart illustrating an operation for receiving a user data packet according to an exemplary embodiment of the present invention.

Referring to FIG. 10, the receiver receives a HARQ packet and per packet control information from the transmitter in step 1005 and decodes the HARQ packet based on the per packet control information in step 1010. In step 1015, the receiver performs CRC verification on the decoded HARQ packet. The receiver compares the size of the HARQ packet with a predetermined size threshold in step 1020. The size threshold may be signaled during a call setup. If the HARQ packet is larger than the size threshold, the receiver goes to step 1025, otherwise the receiver goes to step 1030.

In step 1025, the receiver sends an ACK/NACK signal with high reliability according to the CRC verification result. For example, the receiver applies a predetermined high transmit power offset or sets a predetermined high repetition number for the ACK/NACK signal. In step 1030, the receiver sends the ACK/NACK signal with low reliability according to the CRC verification result. For example, the receiver applies a predetermined low transmit power offset or sets a predetermined small repetition number for the ACK/NACK signal. Transmit power offsets and/or repetition numbers for the high reliability and the low reliability are managed in Rx HARQ profiles.

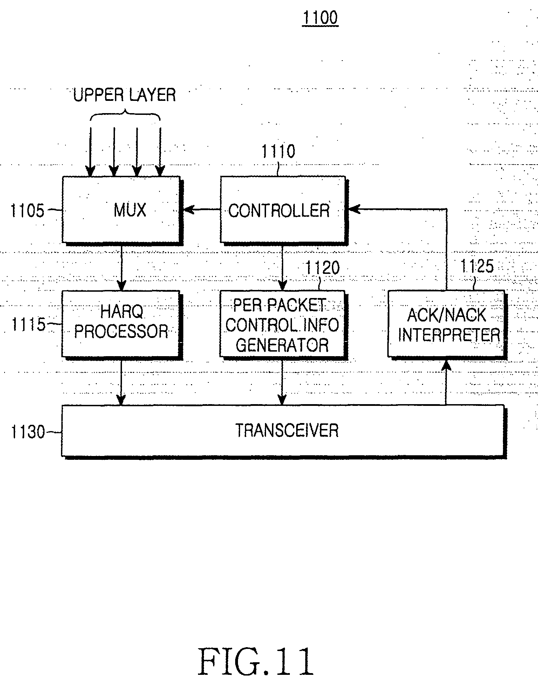

FIG. 11 is a block diagram of a transmitter according to an exemplary embodiment of the present invention.

Referring to FIG. 11, a transmitter 1100 includes a MUX 1105, a HARQ processor 1115, a controller 1110, an ACK/NACK interpreter 1125, a per packet control information generator 1120, and a transceiver 1130.

In operation, the controller 1110 notifies the MUX 1105 of the amount of data to be sent in the next transmission time interval. The MUX 1105 receives as much data as the notified amount from upper layers, multiplexes the user data in one HARQ packet, provides the HARQ packet to the corresponding HARQ processor 1105. Among a plurality of HARQ processors of a HARQ entity, only the HARQ processor 1105 is illustrated in FIG. 11. The HARQ processor 1115 channel-encodes the HARQ packet and buffers the coded HARQ packet in a buffer (not shown). The transceiver 1130 sends the HARQ packet received from the HARQ processor 1115 to the receiver.

The per packet control information generator 1120 generates per packet control information for the HARQ packet under the control of the controller 1110. The controller 1110 determines information to be included in the per packet control information, taking into account the use state of the HARQ processor 1115 and channel status, and provides the determined information to the per packet control information generator 1120. In the first embodiment of the present invention, the controller 1110 provides reliability indication information for the HARQ packet to the per packet control information generator 1120 so that the reliability indication information can be included in the per packet control information. The reliability indication information can be an Rx HARQ profile ID, a NACK/ACK error rate class ID, or a HARQ processor ID. In an exemplary embodiment of the present invention, the reliability indication information is the size of the HARQ packet set in the per packet control information.

The per packet control information generator 1120 constructs the per packet control information with the information received from the controller 1110. The transceiver 1130 sends the per packet control information to the receiver in the air. The ACK/NACK interpreter 1125 receives an ACK/NACK signal fed back with the reliability indicated by the Rx HARQ profile information for the HARQ packet. The controller 1110 controls the MUX 1105 to receive new user data from the upper layers or wait in the next transmission time interval according to the feedback signal. If the feedback signal is an ACK signal, the MUX 1105 receives new user data from the upper layers and provides the user data to the HARQ processor 1115. In the case of a NACK signal, the HARQ processor 1115 retransmits the buffered previous HARQ packet.

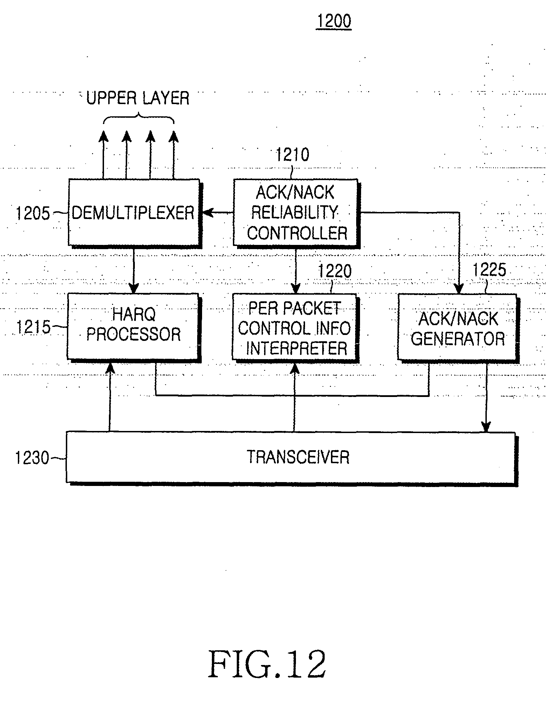

FIG. 12 is a block diagram of a receiver according to an exemplary embodiment of the present invention.

Referring to FIG. 12, a receiver 1200 includes a DEMUX 1205, a HARQ processor 1215, an ACK/NACK reliability controller 1210, a per packet control information interpreter 1220, an ACK/NACK generator 1225, and a transceiver 1230.

In operation, the transceiver 1230 receives a HARQ packet and per packet control information for the HARQ packet from the transmitter. The per packet control information interpreter 1220 extracts reliability indication information from the per packet control information received from the transceiver 1230. In an exemplary embodiment of the present invention, the reliability indication information is a HARQ profile ID or a NACK/ACK error rate class. In an exemplary embodiment of the present invention, the reliability indication information is the size of the HARQ packet. The ACK/NACK reliability controller 1210 decides on the reliability of an ACK/NACK signal for the HARQ packet by interpreting the reliability indication information received from the per packet control information interpreter 1220 and provides reliability information indicating the decided reliability to the ACK/NACK generator 1225.

Meanwhile, the HARQ processor 1215 performs a CRC verification on the HARQ packet associated with the per packet control information, received from the transceiver 1230. If the HARQ packet has passed the CRC verification, it is demultiplexed in the DEMUX 1205 and provided to upper layers. If the HARQ packet has failed in the CRC verification, it is buffered in a buffer (not shown), for combining with a retransmission packet. The HARQ processor 1215 also provides the CRC verification result to the ACK/NACK generator 1225.

The ACK/NACK generator 1225 generates an ACK signal in the case of a successful CRC verification, and a NACK signal in the case of a failed CRC verification. The transceiver 1230 sends the ACK/NACK signal according to the reliability information provided by the ACK/NACK reliability controller 1210. For example, the reliability information may be transmit power or a repetition number for the ACK/NACK signal.

In accordance with exemplary embodiments of the present invention as described above, the error rate of a feedback signal is optimized without significantly decreasing transmission resources by adjusting the reliability of a NACK/ACK error rate and an ACK/NACK error rate in a mobile communication system supporting HARQ. Therefore, the BLER of a user data packet is maintained at an appropriate level.

While the invention has been shown and described with reference to certain exemplary embodiments thereof, it will be understood by those skilled in the art that various changes in form and details may be made therein without departing from the spirit and scope of the invention as defined by the appended claims and their equivalents.

**Claims**

1.   A method of controlling the reliability of a feedback signal indicating whether a user data packet has been successfully received in a mobile communication system supporting Hybrid Automatic Repeat reQuest (HARQ), comprising:

    determining reliability indication information indicating a required reliability for a feedback signal for a user data packet to be transmitted;
    including the reliability indication information in per packet control information associated with the user data packet, and transmitting the user data packet and the per packet control information; and
    receiving the feedback signal with the determined reliability for the transmitted user data packet and determining whether to retransmit the user data packet according to the feedback signal.

2.   The method of claim 1, wherein the reliability indication information comprises at least one of a required error rate, a transmit power offset, and a repeated transmission number for the feedback signal.

3. The method of claim 1, wherein the reliability indication information comprises a required error rate class for the feedback signal.

4. The method of claim 1, wherein the reliability indication information comprises a HARQ processor identifier (ID) identifying a HARQ processor for processing the user data packet.

5. The method of claim 1, wherein the determining of the reliability indication information comprises determining the reliability indication information according to a required Quality of Service (QoS) for the user data packet.

6. The method of claim 1, wherein the reliability indication information comprises a size of the user data packet.

7. An apparatus for controlling the reliability of a feedback signal indicating whether a user data packet has been successfully received in a mobile communication system supporting Hybrid Automatic Repeat reQuest (HARQ), comprising:

a controller for determining reliability indication information indicating a required reliability for a feedback signal for a user data packet to be transmitted;
a per packet control information generator for including the reliability indication information in per packet control information associated with the user data packet, and transmitting the per packet control information;
a HARQ processor for channel-encoding the user data packet and transmitting the channel-coded user data packet; and
a feedback signal interpreter for interpreting the feedback signal received with the determined reliability for the transmitted user data packet and determining whether to retransmit the user data packet according to the feedback signal.

8. The apparatus of claim 7, wherein the reliability indication information comprises at least one of a required error rate, a transmit power offset, and a repeated transmission number for the feedback signal.

9. The apparatus of claim 7, wherein the reliability indication information comprises a required error rate class for the feedback signal.

10. The apparatus of claim 7, wherein the reliability indication information comprises a HARQ processor identifier (ID) identifying a HARQ processor for processing the user data packet.

11. The apparatus of claim 7, wherein the controller determines the reliability indication information according to a required Quality of Service (QoS) for the user data packet.

12. The apparatus of claim 7, wherein the reliability indication information comprises a size of the user data packet.

13. A method of controlling the reliability of a feedback signal indicating whether a user data packet has been successfully received in a mobile communication system supporting Hybrid Automatic Repeat reQuest (HARQ), comprising:

receiving a user data packet, and per packet control information including reliability indication information indicating a required reliability for a feedback signal for the user data packet;
determining a reliability for the feedback signal according to the reliability indication information;
channel-decoding the user data packet according to the per packet control information and performing an error verification to determine whether the decoded user data packet has errors; and
transmitting the feedback signal with the determined reliability according to the result of the error verification.

14. The method of claim 13, wherein the reliability indication information comprises at least one of a required error rate, a transmit power offset, and a repeated transmission number for the feedback signal.

15. The method of claim 13, wherein the reliability indication information comprises a required error rate class for the feedback signal.

16. The method of claim 13, wherein the reliability indication information comprises a HARQ processor identifier (ID) identifying a HARQ processor for processing the user data packet.

**17.** The method of claim 13, wherein the reliability indication information is determined according to a required Quality of Service (QoS) for the user data packet.

**18.** The method of claim 13, wherein the reliability indication information comprises a size of the user data packet.

**19.** The method of claim 13, wherein the transmitting of the feedback signal comprises transmitting the feedback signal with at least one of transmit power and according to a repeated transmission number, the transmit power and the repeated transmission number is determined according to the determined reliability.

**20.** An apparatus for controlling the reliability of a feedback signal indicating whether a user data packet has been successfully received in a mobile communication system supporting Hybrid Automatic Repeat reQuest (HARQ), comprising:

a receiver for receiving a user data packet, and per packet control information including reliability indication information indicating a required reliability for a feedback signal for the user data packet;
a reliability controller for determining a reliability for the feedback signal according to the reliability indication information;
a HARQ processor for channel-decoding the user data packet according to the per packet control information and performing an error verification to determine whether the decoded user data packet has errors;
a feedback signal generator for generating a feedback signal according to the result of the error verification; and
a transmitter for transmitting the feedback signal with the determined reliability.

**21.** The apparatus of claim 20, wherein the reliability indication information comprises at least one of a required error rate, a transmit power offset, and a repeated transmission number for the feedback signal.

**22.** The apparatus of claim 20, wherein the reliability indication information comprises a required error rate class for the feedback signal.

**23.** The apparatus of claim 20, wherein the reliability indication information comprises a HARQ processor identifier (ID) identifying a HARQ processor for processing the user data packet.

**24.** The apparatus of claim 20, wherein the reliability indication information is determined according to a required Quality of Service (QoS) for the user data packet.

**25.** The apparatus of claim 20, wherein the reliability indication information comprises a size of the user data packet.

**26.** The apparatus of claim 20, wherein the reliability controller determines at least one of transmit power and a repeated transmission number for transmission of the feedback signal according to the determined reliability.

**27.** A method of controlling the reliability of a feedback signal indicating whether a user data packet has been successfully received in a mobile communication system supporting Hybrid Automatic Repeat reQuest (HARQ), comprising:

transmitting a user data packet and per packet control information comprising at least a size of the user data packet; and
receiving a feedback signal with a reliability corresponding to the size for the transmitted user data packet and determining whether to retransmit the user data packet according to the feedback signal.

**28.** An apparatus for controlling the reliability of a feedback signal indicating whether a user data packet has been successfully received in a mobile communication system supporting Hybrid Automatic Repeat reQuest (HARQ), comprising:

a per packet control information generator for generating per packet control information including at least a size of a user data packet and transmitting the per packet control information;
a HARQ processor for channel-encoding the user data packet and transmitting the channel-coded user data packet; and
a feedback signal interpreter for interpreting a feedback signal received with a reliability corresponding to the size for the transmitted user data packet, the feedback signal indicating whether the user data packet has been received successfully and determining whether to retransmit the user data packet according to the feedback signal.

29. A method of controlling the reliability of a feedback signal indicating whether a user data packet has been successfully received in a mobile communication system supporting Hybrid Automatic Repeat reQuest (HARQ), comprising the steps of:

receiving a user data packet, and per packet control information including at least a size of the user data packet;
determining a reliability for a feedback signal for the user data packet according to the size;
channel-decoding the user data packet according to the per packet control information and performing an error verification to determine whether the decoded user data packet has errors; and
transmitting the feedback signal with the determined reliability according to the result of the error verification.

30. The method of claim 29, further comprising, before the receiving of the user data packet, acquiring a size threshold, first reliability indication information for use where the size of the user data packet is larger than the size threshold, and second reliability indication information for use where the size of the user data packet is at least one of equal to and less than the size threshold.

31. The method of claim 30, wherein the first reliability indication information and the second reliability indication information comprises at least one of a required error rate, a transmit power offset, and a repeated transmission number for the feedback signal.

32. The method of claim 29, wherein the determining of the reliability comprises:

comparing the size of the user data packet with the size threshold;
determining to transmit the feedback signal with a high reliability, if the size of the user data packet is larger than the size threshold; and
determining to transmit the feedback signal with a low reliability, if the size of the user data packet is at least one of equal to and less than the size threshold.

33. The method of claim 32, wherein the first reliability indication information and the second reliability indication information comprises at least one of a transmit power offset and a repeated transmission number for the feedback signal.

34. An apparatus for controlling the reliability of a feedback signal indicating whether a user data packet has been successfully received in a mobile communication system supporting Hybrid Automatic Repeat reQuest (HARQ), comprising:

a receiver for receiving a user data packet, and per packet control information including at least a size of the user data packet;
a reliability controller for determining a reliability for a feedback signal for the user data packet according to the size;
a HARQ processor for channel-decoding the user data packet according to the per packet control information and performing an error verification to determine whether the decoded user data packet has errors;
a feedback signal generator for generating the feedback signal according to the result of the error verification; and
a transmitter for transmitting the feedback signal with the determined reliability.

35. The apparatus of claim 34, wherein before receiving the user data packet and the per packet control information, the reliability controller acquires a size threshold, first reliability indication information for use where the size of the user data packet is larger than the size threshold, and second reliability indication information for use where the size of the user data packet is at least one of equal to and less than the size threshold.

36. The apparatus of claim 35, wherein the first reliability indication information and the second reliability indication information comprises at least one of a required error rate, a transmit power offset, and a repeated transmission number for the feedback signal.

37. The apparatus of claim 34, wherein the reliability controller compares the size of the user data packet with the size threshold, determines to transmit the feedback signal with a high reliability, if the size of the user data packet is larger than the size threshold, and determines to transmit the feedback signal with a low reliability, if the size of the user data packet is at least one of equal to and less than the size threshold.

**38.** The apparatus of claim 37, wherein the first reliability indication information and the second reliability indication information comprises at least one of a transmit power offset and a repeated transmission number for the feedback signal.

FIG.1

FIG.2

FIG.3

415a
HARQ PROFILE #3
· TX POWER=P1
· MAX RETRANSMISSION
=N1

410a
HARQ PROFILE #2
· TX POWER=P2
· MAX RETRANSMISSION
=N2

405a
HARQ PROFILE #1
· TX POWER=P3
· MAX RETRANSMISSION
=N3

415
UPPER
LAYER
ENTITY #3

410
UPPER
LAYER
ENTITY #2

405
UPPER
LAYER
ENTITY #1

420— MULTIPLEXING

425— HARQ ENTITY

FIG.4

EP 1 755 251 A2

FIG.5

**TX HARQ PROFILE #3** (515a)
· TX POWER=P3
· MAX RETRANSMISSION =N3

**TX HARQ PROFILE #2** (510a)
· TX POWER=P2
· MAX RETRANSMISSION =N2

**TX HARQ PROFILE #1** (505a)
· TX POWER=P1
· MAX RETRANSMISSION =N1

UPPER LAYER ENTITY #1 (515)
UPPER LAYER ENTITY #2 (510)
UPPER LAYER ENTITY #3 (505)

MULTIPLEXING (520)

HARQ ENTITY (525)

ACK/NACK

USER DATA PACKET

**RX HARQ PROFILE #1** (550a)
· NACK/ACK ERROR RATE =R3

**RX HARQ PROFILE #2** (555a)
· NACK/ACK ERROR RATE =R2

**RX HARQ PROFILE #3** (560a)
· NACK/ACK ERROR RATE =R1

UPPER LAYER ENTITY #1 (550)
UPPER LAYER ENTITY #2 (555)
UPPER LAYER ENTITY #3 (560)

MULTIPLEXING (545)

HARQ ENTITY (540)

605

PER PACKET CONTROL INFORMATION
(PACKET SIZE, AMC,
RX HARQ PROFILE INFO. ETC) (615)

610

RECEIVER

HARQ PACKET (620)

TRANSMITTER

ACK/NACK (625)

# FIG.6

```
        ┌──────────┐
        │  START   │
        └────┬─────┘
             │
             ▼
   ┌──────────────────────────┐
   │ SCHEDULE TRANSMISSION OF │──705
   │    USER DATA PACKET      │
   └────────────┬─────────────┘
             │
             ▼
   ┌──────────────────────────┐
   │  DETERMINE Rx HARQ PROFILE│──710
   └────────────┬─────────────┘
             │
             ▼
   ┌──────────────────────────┐
   │     SEND PER PACKET      │──715
   │   CONTROL INFORMATION    │
   └────────────┬─────────────┘
             │
             ▼
   ┌──────────────────────────┐
   │    SEND HARQ PACKET      │──720
   └────────────┬─────────────┘
             │
             ▼
        ┌──────────┐
        │   END    │
        └──────────┘
```

# FIG.7

START

RECEIVE PER PACKET
CONTROL INFORMATION — 805

VERIFY Rx HARQ PROFILE — 810

RECEIVE HARQ PACKET — 815

CRC VERIFICATION — 820

SEND ACK/NACK BASED ON
Rx HARQ PROFILE — 825

END

FIG.8

905                                                    910

| RECEIVER |                                    | TRANSMITTER |

USER DATA PACKET (SIZE > THRESHOLD) (915)

ACK/NACK WITH HIGH RELIABILITY (920)

USER DATA PACKET (SIZE ≤ THRESHOLD) (925)

ACK/NACK WITH LOW RELIABILITY (930)

FIG.9

START

RECEIVE HARQ PACKET —1005

DECODING —1010

CRC VERIFICATION —1015

1020
SIZE>THRESHOLD? — NO

YES

SEND ACK/NACK
WITH HIGH RELIABILITY —1025

SEND ACK/NACK WITH
LOW RELIABILITY —1030

END

FIG.10

1100

FIG.11

1200

UPPER LAYER

1210

1205 — DEMULTIPLEXER

ACK/NACK
RELIABILITY
CONTROLLER

1220

1225

1215 — HARQ
PROCESSOR

PER PACKET
CONTROL INFO
INTERPRETER

ACK/NACK
GENERATOR

1230 — TRANSCEIVER

FIG.12